# EUROPEAN PATENT APPLICATION

(11) **EP 4 625 321 A1**
(43) Date of publication of application: **01.10.2025**
(21) Application number: 24167232.8
(22) Date of filing: 28.03.2024
(51) Int. Cl.: G06T 7/521, G06T 7/55

(54) **3D MODEL GENERATION IN IMAGING SYSTEM**

(71) Applicant: Smart Eye AB, 413 27 Göteborg (SE)
(72) Inventor: SEVERIN, Joel, 413 27 Göteborg (SE); LIND, Henrik, 413 27 Göteborg (SE); WILKE, Detlef, 413 27 Göteborg (SE)
(74) Representative: Lind Edlund Kenamets Intellectual Property AB

(57) **Abstract**

A method for generating a scaled 3D model of an object, comprising illuminating a field of view with an infrared light signal configured to enable distance detection, acquiring a feed of image frames from a pixelated image sensor, identifying a set of 2D anatomical feature points in the image frames, generating a 3D model of the object based on the feed of image frames and the set of 2D anatomical features in each image frame, determining a set of precise distance measures to a set of selected points in each image frame based on a subset of pixels in a surrounding of each selected point, and scaling the 3D model based on the precise distance measures.

By restricting the processing relating to the precise distance measures to a subset of pixels in the image frame, the required computational power is significantly reduced.

## Description

### Field of the invention

The present invention relates to generating a scaled 3D model of an object located within a field of view of an imaging system. The imaging system may form part of a driver monitoring system.

### Background of the invention

Head tracking and eye tracking are becoming increasingly important in many applications, including various automotive applications. In a driver monitoring systems (DMS), one or several cameras are mounted in front of the driver, and controlled to acquire a video feed of the face of the driver. Based on the images, the system can determine various information about the driver, such the position and orientation of the driver's head, the driver's eye gaze direction, if the driver's eyes are fully opened, etc. Based on this information, various types of actions can be taken, including issuing a drowsiness alert.

In some systems, multiple cameras are used to acquire images of the driver's head from different angles, and a scaled 3D model of the head is generated from these images.

However, in some applications, e.g. for reasons of miniaturization or economy, only one camera is available. In order to successfully generate a scaled 3D model with only one camera, a distance between the camera and the head needs to be estimated. Typically, an estimated distance measure is obtained based on the 2D images and knowledge about typical head features, such as pupil diameter or head size. In a typical automotive application, such an estimated distance measure may have a 3-6% error margin. This is sufficient for many head tracking and eye tracking applications, but a more accurate distance measure would be beneficial.

In the art, there are several ways to very accurately determine a 3D image, sometimes referred to as a depth image. However, the depth measurement should preferably be accomplished with as little additional hardware as possible, and rather utilize the existing hardware, such as imaging sensor and IR light source.

One approach is to illuminate an object with an IR light pattern, and then identify points of the pattern in the acquired image. For example, the pattern may be an equidistant or pseudo-random mesh of points, where variations in the distance between neighboring points in the acquired image will correlate to the distance to the object. This approach is sometimes referred to as the "structured light" approach.

Another approach is to detect the time-of-flight of emitted light which has been reflected by the object and then received by the sensor. There are various ways to accomplish time-of-flight detection. One approach is to transmit a high frequency transmit signal, and to switch the receiver with the frequency of the transmit signal. The distance in the specific direction can be determined based on a relationship between the light received in consecutive half-periods.

Although these approaches, and several other depth sensing techniques, are available for image depth detection, they become very expensive in terms of computational power when a complete distance topology (depth image) is calculated. In conventional structured light sensors, the dot pattern is typically rather dense, and distance is detected in a very large number of points. In conventional time-of-flight sensors, distance calculations are typically made for every pixel.

There is thus a need to provide the accuracy of more sophisticated distance measurement techniques, but without an excessive need for computational power.

### General disclosure of the invention

It is an object with the present invention to meet the above need, and to provide more accurate, yet computationally effective, distance detection in a driver monitoring system.

According to a first aspect of the present invention, this and other objects are achieved by a method for generating a scaled 3D model of an object located within a field of view of an imaging system, comprising illuminating the field of view with an infrared light signal configured to enable distance detection, detecting reflections of the infrared light signal in a pixelated image sensor, acquiring a feed of image frames from the pixelated image sensor, identifying a set of 2D anatomical feature points in the image frames, generating a 3D model of the object based on the feed of image frames and the set of 2D anatomical features in each image frame, determining a set of precise distance measures to a set of selected points in each image frame based on a subset of pixels in a surrounding of each selected point, and calibrating the 3D model based on the precise distance measures.

The expression "infrared light" is intended to include the whole infrared range. This range is sometimes divided into IR-A, IR-B and IR-C, and sometimes into near infrared (NIR), mid infrared (MIR) and far infrared (FIR).

The invention is based on the realization that a complete depth image is not necessary to improve the performance of the system. Instead, it is sufficient to determine precise distance measures to a limited set of points and then calibrate a 3D model obtained from 2D feature points detected in a series of images. By restricting the processing relating to the precise distance measures to a subset of pixels in the image frame, the required computational power is significantly reduced.

The 3D model has typically, but not necessarily, been scaled using a set of estimated distance measures. Without any distance measure, the 3D model is a "relative" model, which needs to be calibrated (or scaled) based on one or several distance measures. The act of calibrating a relative model is often referred to as "scaling" the model.

Estimated distance measures may also be used to eliminate ambiguities in the precise distance measures. Such ambiguities are present in many ranging methods, and may be caused by periodicity in the measurement principle.

The estimated distances may be determined more frequently than the precise distance measures. In such a case, estimated distance measures may provide more frequent distance tracking of the face in between precise measurements.

The precise distance measurements may advantageously be performed less frequently than a frame rate of the feed of image frames. In other words, the 3D model may not be calibrated for every frame. For example, the 3D model may be calibrated only every tenth frame, only every 100^{th} frame or even more seldomly. In some implementations, it may be sufficient to only calibrate the 3D model at system start-up, i.e. every time a new user is detected.

In some embodiments, the method may further comprise detecting an amount of change between a recent image frame and a past image frame, comparing the amount of change with a predefined threshold, and determining the set of precise distance measures in response to detecting that the amount of change exceeds the threshold. So, in this case, calibration based on precise distance measures may be performed at start-up, and then every time a significant motion (change exceeding the threshold) takes place.

The set of selected points, for which precise distance measures are determined, may be a separate set of points. However, it may be beneficial that this set of points at least partly overlaps with the set of 2D anatomical feature points, for which 3D coordinates are determined in the 3D model. However, there may also be reasons to select points for other reasons. For example, an area of a face may be more or less suitable for precise distance detection. A very dark area (like the pupil) may be less suitable, as it absorbs a significant amount of light.

The transmit light signal may be a structured pattern of IR light dots, in which case the set of precise distance measures can be determined by locating reflections of the IR light dots in a portion of one of the image frames corresponding to the subset of pixels. The pattern may be regular or pseudo-random.

Alternatively, the transmit light signal may be a train of IR light pulses, having a modulation frequency f_{mod}, and the image sensor pixels are switched between (at least) two light receivers with the same frequency f_{mod}. As a result, each pixel outputs two pixel values. The sum of these values is the total intensity of the pixel, and the relationship between these values indicates the time of flight of an IR light pulse which in turn is proportional to the distance. The precise distance measures may be determined for any given pixel based on the two pixel values. The frequency f_{mod} may be in the order of tens of MHz, preferably more than 50 MHZ, and even more preferably 100 MHz or more.

It is noted that the effective use of depth sensing technology by limiting the computational efforts to a small set of points in the field of view may be advantageous also in other situations. For example, where a first distance measure to a set of points has been obtained in one way, e.g. by estimating a distance in the way typically done in face tracking applications, a second distance measure to the same set of points may serve as a redundant confirmation that the first distance measure was in fact correct, or at least not significantly incorrect. Such confirmation may enable the use of the distance for safety critical actions, such as deactivating an air bag when a driver is too close to it. Such applications are not necessarily restricted to the previously presented aspects of the invention, but may rather be considered as relating to a separate inventive concept.

### Brief description of the drawings

The present invention will be described in more detail with reference to the appended drawings, showing currently preferred embodiments of the invention.
Figure 1 schematically shows cameras mounted on the dashboard of a vehicle.
Figure 2 shows an imaging system according to an embodiment of the present invention.
Figure 3 shows the processing unit in figure 2.
Figure 4 is a flow chart of a method according to an embodiment of the invention.
Figure 5a shows a set of anatomical landmarks detected in an image in a face.
Figure 5b shows a 3D model based on the points detected in figure 5a.

### Detailed description of preferred embodiments

Embodiments of the present invention will now be discussed with reference to an imaging system 10 having a camera 4 mounted in a vehicle cabin. The imaging system 10 may form part of e.g. a driver monitoring system (DMS) or a cabin monitoring system (CMS).

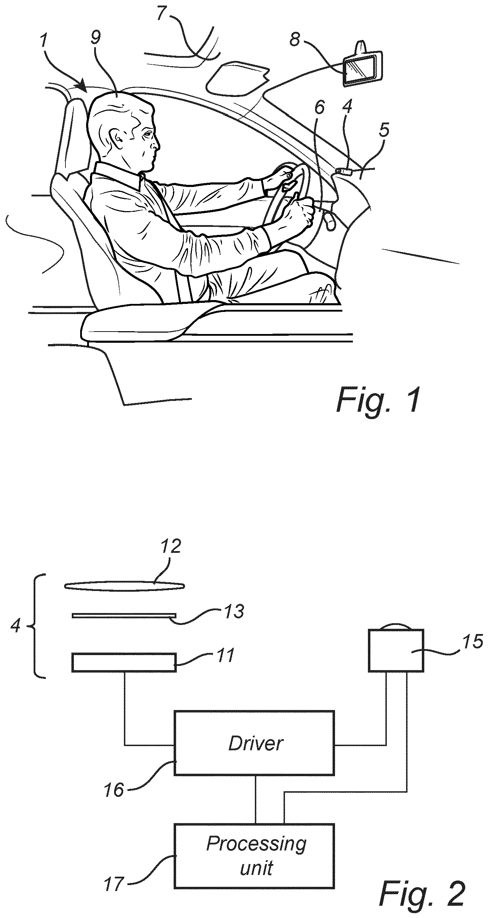

Figure 1 shows a driver 1 sitting in a driver's seat 2 of vehicle 3. A camera 4 is mounted in front of the driver 1, here on the dashboard 5. Alternatively, the cameras 4 may be mounted on the steering wheel column 6, be fixed to the ceiling 7, be mounted on the rearview mirror 8, or have any other location which is appropriate for the specific application. Regardless of how it is mounted, the camera 4 should have a clear view of at least the head 9 of the driver 1, and possibly the whole upper body of the driver 1. The camera 4 is typically arranged at a distance from the driver 1 in the range from 40 cm to 120 cm.

With reference to figure 2, the components of the imaging system 10 are shown in more detail.

The camera 4 here includes a pixelated image sensor 11, e.g. a CMOS image sensor, arranged behind suitable optics 12 and filter 13. The optics 12 is configured to project incident light onto the image plane of the image sensor 11.

The system 10 further includes at least one light source 15, arranged at a known physical relationship with respect to the camera 4. The light source 15 is typically configured to emit light outside the visible range such as infra-red (IR) or near infra-red (NIR). The light source 15 may be a solid-state light source, such as a LED or a VCSEL. In the illustrated example, the light source 15 is configured to emit light with a light spectrum concentrated in a 50 nm band centered around 850 or 940 nm (NIR). The filter 13, which may be optical band-pass filters, e.g. interference filters, is configured to have a pass-band substantially corresponding to the light emission spectrum of the light source 15. So, in the above-mentioned example, the filter 13 should have a pass-band centered around 850 nm or 940 nm, e.g. 825 - 875 nm or 915 - 965 nm.

A driver 16 is connected to the camera 4 and the light source 15, and is configured to control the light source and camera, possibly in a synchronized manner. Typically, the light source 15 is operated with a given duty cycle, and the sensors 11 are controlled to acquire images in synchronization with the light pulses from the light source 15.

The system further includes a processing unit 17 connected to receive sensor data from the sensor 11, and to process this data to generate a 3D model of an object, in this case the head or possibly upper torso of the driver 1.

The system 10 in figure 2 has many different applications, including automotive applications where the eyes of a driver are tracked e.g. for safety reasons, as well as various man-machine interfaces.

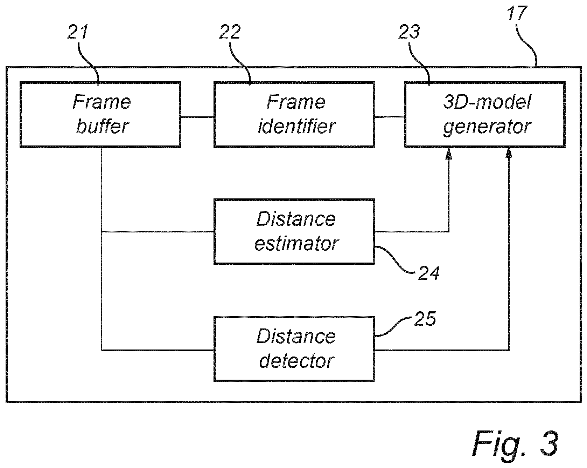

As shown in more detail in figure 3, the processing unit 17 includes a frame buffer 21, configured to store the image data in consecutive image frames. The frame rate is typically 50 Hz (one frame every 20 ms), but other frame rates may be contemplated.

The frame buffer is connected to a feature identifier 22, configured to identify 2D anatomical feature points in each image frame. In the case of a head or face, examples of useful 2D feature points may be corners of the eye, corners of the mouth, nose wings, ear lobes, etc. Such feature points are sometimes referred to as "landmarks".

A 3D model generator 23 is configured to receive the 2D anatomical feature points and generate a 3D model of the head (or torso) of the user.

Further, the processing unit 17 includes a distance estimator 24, configured to estimate a distance between the camera 4 and the object based on the image frames. The estimated distance may be determined in various ways using known camera properties, such as focal length and pixel density, and known statistical properties of the object. In the case of a driver's head, statistical properties may include average pupil size and average head size.

For example, the distance estimator may detect a pupil diameter in an image frame. Based on an expected (average) pupil diameter, focal length and pixel density, the distance to the pupil may be estimated.

Finally, the processing unit 17 includes a precise distance detector 25, configured to determine a set of precise distance measures between the camera 4 and a set of points of interest of the object (head 9). Contrary to a conventional depth image sensor, it is not necessary to determine a complete depth image, but only a limited set of precise distance measures which are used to calibrate the 3D model. Therefore, only a subset of pixels of the image frames associated with the points of interest need to be taken into account when determining the precise distance measures. The points for which a precise distance measure is determined may fully or partially overlap with the set of 2D anatomical feature points.

There are different ways to determined precise distance measures, and two examples will be provided in the following.

In one embodiment, the light source 15 is capable of emitting structured light, e.g. a dot pattern, in addition to "flood" illumination. This may be accomplished by selectively providing a structured filter in front of a light emitting device such as an LED or a VCSEL. The precise distance detector 25 is configured to determine a distance to any point of interest in an acquired image frame by locating dots in a surrounding of the point of interest and comparing their distances and relating them to a known reference. In brief, the distance between two adjacent points will increase with increased distance from the light source. Note that the camera 4 has a known physical relationship with respect to the light source 15. The details of structured light distance measurements are well known to a person skilled in the art.

In another embodiment, the system 10 is capable of performing a time-of-flight detection. In a specific example, the light source 15 is controlled by driver 16 to emit high frequency modulated light, e.g. an IR light pulse train with a modulation frequency, f_{mod}, in the order of tens of MHz (e.g. 10 - 100 MHz). The pulse duration may be half the period (50% duty cycle) but may also be shorter. The light source may be a LED or a VCSEL, modulated by driver 16. An LED is cost efficient, and may provide switching frequencies at least up to 40 MHz. A VCSEL may provide switching frequencies up to 100 MHz.

Further, each pixel of the light sensor 11 includes two light receivers (e.g. capacitors) and a high frequency switch, which alternates between the two light receivers with a frequency corresponding to the modulation frequency. In other words, the first receiver is activated when a pulse is emitted, while the second receiver is deactivated. After a time corresponding to the pulse duration, typically one half-period, the first receiver is deactivated, and the second receiver is activated. As a result, one part of reflected light will be received by the first receiver, while another part of reflected light will be received by the second receiver. The time of fight of the emitted pulse will determine the amount of light received by the first and second receiver, respectively. Pixel values from both sets of receivers are outputted from the sensor.

It is also possible that the sensor has four different receivers for each sensor, having active periods shifted only a quarter of a period. Such a sensor will output four pixel values for each pixel.

The frame buffer 21 will buffer two (or four) sub-images per frame; one sub-image containing pixel values from the first set of receivers, and another sub-image containing pixel values from the second set of receivers. The sum of these sub-images is provided to the feature identifier 22 as the image frame to be used of 2D feature point identification and 3D model generation. The precise distance detector 25 is connected to receive both feeds of sub-images, and to determine a distance to a specific pixel based on a relationship between the two pixel values for this specific pixel. More specifically, the relationship between the pixel values is indicative of a phase shift, which in turn is indicative of a distance.

The processing unit 17 and its components 21-25 may be implemented wholly or partially by software stored in a memory and executed by as a processor. It may also be partially implemented in hardware. Further, the processing unit 17 may be distributed in more than one physical entity. For example, the frame buffer may form part of the sensor 11.

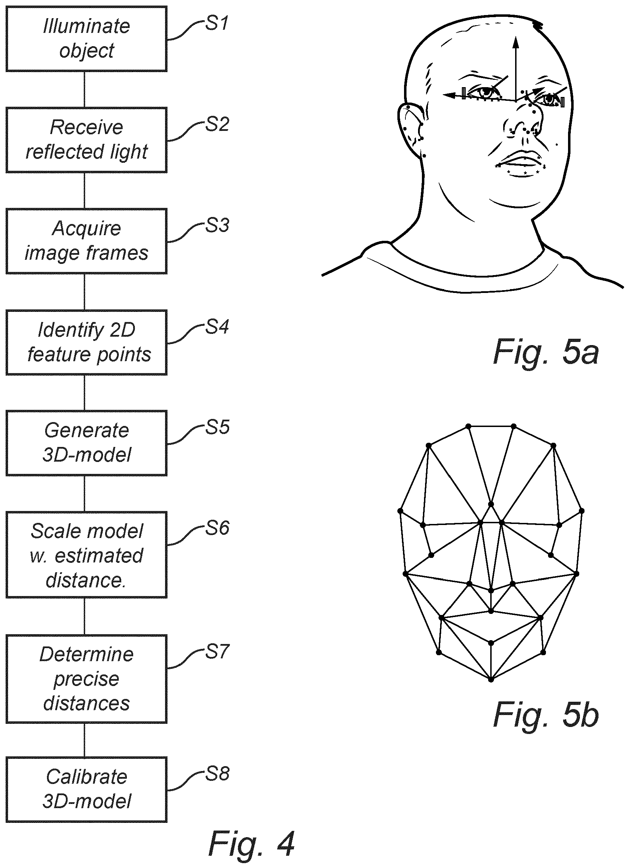

Figure 4 illustrates a process performed by the processor 17 or 117.

First, in step S1, the light source 15 is controlled by the controller 16 to illuminate the field of view of the camera 4, including the head 9 (and possibly the entire upper torso) of user 1, with an IR light transmit signal configured to enable distance detection. As mentioned above, the transmit signal may be a structured light signal (e.g. a dot pattern), or it may be a high frequency modulated light signal.

In the case of a structured light signal (with dots), the controller 16 may control the light source 15 to alternatingly emit the structured light signal and a solid light signal ("flood" light). This enables acquisition of images without any dot pattern for the normal image processing.

In step S2, reflections of the transmit signal are received by pixelated sensors 11.

In step S3, a feed of image frames is provided by the frame buffer 21. In the case of a structured light signal, the feed of frames will include a mixed sequence of patterned image frames and non-patterned image frames. In the case of high frequency modulated light signal, the feed of image frames will include two sub-images and a "total" frame equal to the sum of the two sub-images.

Then, in step S4, a set of 2D anatomical feature points are detected in each image, see figure 5a. The anatomical feature points are chosen as points which are easily and reliably detectable, such as corners of the eyes, wings of the nose, etc. It is possible that not all feature points are detectable in all images (e.g. due to the viewing angle), but each 2D feature points should be present in more than one image to be useful in the next step.

In step S5, a 3D model of the head 9 is generated using the feed of 2D image frames and the identified 2D feature points in each frame. In principle, the 3D model is simply a set of relative 3D coordinates for the each identified feature point. One way to obtain these coordinates is to assume an approximate model (e.g. based on general characteristics of a human face) including a set of nodes joined by edges (see figure 5b). At least some of the nodes of the model should correspond to 2D feature points which have been identified in the 2D images. By tracking the 2D feature points in consecutive images, and adjusting the model (i.e., distances between the nodes), the approximate model can be aligned with the actual face in the images.

The number of tracked feature points will depend on the application, but typically in the range 3-25 points are tracked. Of course, not all feature points are available in each frame. For example, feature points of one ear may be non-visible when the user is looking to the side. And some features may be temporarily occluded by a hand or an object.

In the absence of any distance information, the 3D model is relative, i.e. it is not to scale. In order to scale the 3D model, it is necessary to determine a distance between the camera and the object (head 9). For this purpose, in step S6 the model is scaled using a set of estimated distance measures, each estimated distance measure representing a distance between the sensor 11 and a point or portion of the object (head 9). The estimated distance measures may be obtained by comparing detected properties of features identified in the image frame with statistical properties of the features, and using knowledge about the camera properties. In the case of a head, relevant features may be pupil diameter or head size, for which statistical averages are known. For example, points on either side of the pupil can be identified and the distance between the points can be compared to a standard pupil diameter. By relating the detected width (in pixels) to the pupil diameter, and based on knowledge about the camera optics (e.g. focal length) and image sensor (e.g. pixel density), a distance to the pupil can be estimated.

In step S7, the precise distance detector 25 determines a set of precise distance measures to a set of points of interest.

As discussed above, in the case of a structured light detection, the precise distance is determined by identifying dots in the image frames received from the frame buffer 21, and calculating the precise distance based on the location of the dots.

In the case of time-of-flight detection, the precise distance for a specific pixel is determined by calculating a phase difference based on the two pixel values for the pixel mixing, and converting the phase difference to a distance based on the modulation frequency and the speed of light.

It is important to note that the number of points for which a precise distance is obtained is significantly less than the number of pixels, and also significantly less than the number of dots in the case of structured light.

In the case of structured light, only a limited number of light dots need to be identified and processed. In the case of time-of-flight detection, only a limited number of pixels need to be processed. This significantly reduces the required computational power.

In both examples - structured light and time-of-flight detection - the precise distance measures are susceptible to ambiguities caused by periodicity of the measurement approach. For example, in the case of regularly structured light, different light dots will appear in the same position at different distances. In the case of pseudo-random structured light, one dot may be mistaken for an adjacent dot. Further, in the case of time-of-flight detection, the detected phase difference (and associated distance) will be periodic with multiples of 2π radians.

Therefore, step S7 preferably involves resolving ambiguities in the precise distance measure using the estimated distance measure which was obtained in step S5. The estimated distance measure may serve to eliminate alternative (and erroneous) distance measures. For example, if a detected dot indicates a distance which deviates significantly from the estimated distance, the detected dot can be assumed to be the "next" dot and not the adjacent dot. Likewise, if a time-of flight measurement indicates a distance measure which significantly deviates from the estimated distance, then the detected phase can be assumed to be a factor 2π off.

Finally, in step S8, the 3D model is calibrated with the precise distance measures, to obtain a calibrated 3D model. This calibrated 3D model can now be used by the CPU 17, 117 to perform further image analysis, such as head tracking and/or eye tracking.

In the illustrated example, the model was first scaled using estimated distance measures, and then calibrated using the precise distance measures. It is noted that "scaling" is essentially a first-time calibration. In other words, the calibration in step S8 does not require the scaling in step S6. If the 3D model has not been previously scaled (i.e. it is still a relative model) then the calibration in step S8 will serve to scale the model.

The process in steps S7 and S8 is not necessarily performed for each frame in the feed. On the contrary, it may be advantageous to only determine precise distances and calibrate the 3D model at regular intervals, e.g. every hundredth frame in the feed. The more sparce calibration, the less computational power is required. In the case of structured light, this means that a structured light signal only needs to be emitted occasionally, e.g. every hundredth frame. In the case of time-of-flight detection, the processing of phase shift and distance only needs to be done occasionally, e.g. every hundredth frame.

In the example above, an estimate distance measure is determined more often (e.g. for each frame) and a precise distance measure is determined less frequently. However, if sufficient processing power is available, an alternative approach may be to determine precise distance measures sufficiently often that no estimated distance measures are required. For example, step S7 and step S8, determining precise distance measures and scaling/calibrating the 3D model, can be performed for every frame or every other frame. In this case, step S6 can be omitted.

Optionally, the CPU 17, 117 can be configured to determine an amount of movement (i.e. change) between two consecutive frames, and compare with a predefined threshold. The CPU 17, 117 can then initiate the process in figure 3 only if the threshold is exceeded. If there is little or no motion, the distances are unlikely to have changed, and no calibration is required.

The person skilled in the art realizes that the present invention by no means is limited to the embodiments described above. On the contrary, many modifications and variations are possible within the scope of the appended claims. For example, there are different alternatives for time-of-flight detection than the high frequency modulated pulse approach disclosed herein.

## Claims

1. A method for generating a scaled 3D model of an object located within a field of view of an imaging system (10), comprising:
illuminating (step S1) the field of view with an infrared light signal configured to enable distance detection;
detecting (step S2) reflections of said infrared light signal in a pixelated image sensor;
acquiring (step S3) a feed of image frames from the pixelated image sensor;
identifying (step S4) a set of 2D anatomical feature points in the image frames;
generating (step S5) a 3D model of the object based on the feed of image frames and the set of 2D anatomical features in each image frame;
determining (step S7) a set of precise distance measures to a set of selected points in each image frame based on a subset of pixels in a surrounding of each selected point; and
calibrating (step S8) the 3D model based on said precise distance measures.

2. The method according to claim 1, further comprising scaling the 3D model using one or several estimated distances between the image sensor and one or several portions of the object to obtain a scaled 3D model, said estimated distances being determined based on known properties of the image sensors and statistic information about the object.

3. The method according to claim 2, further comprising eliminating ambiguities in the precise distance measures using the estimated distance measures.

4. The method according to claim 2 or 3, wherein the step of scaling the model using estimated distance measures is performed more often than the step of determining a set of precise distance measures.

5. The method according to claim 4, wherein the step of determining a set of precise distance measures is performed less frequently than a frame rate of the feed of image frames.

6. The method according to claim 5, further comprising:
detecting an amount of change between a recent image frame and a past image frame;
comparing the amount of change with a predefined threshold; and
performing the step of determining a set of precise distance measures in response to detecting that the amount of change exceeds the threshold.

7. The method according to one of the preceding claims, wherein the set of selected points, for which precise distance measures are determined, at least partly overlaps with the set of 2D anatomical feature points.

8. The method according to one of the preceding claims, wherein the light signal includes a structured pattern of IR light dots, and wherein the set of precise distance measures is determined by locating reflections of said IR light dots in a portion of one of the image frames corresponding to the subset of pixels.

9. The method according to claim 8, wherein the pattern is a pseudo-random pattern.

10. The method according to any one of claims 1-9, wherein the pixels of the image sensor has at least two light receivers, and wherein the light signal is a high frequency train of IR light pulses, having a modulation frequency f_{mod}, and wherein the method further comprises:
switching between the at least two light receivers with the same frequency f_{mod}, such that each pixel outputs at least two pixel values for each frame, wherein a relationship between the pixel values is indicative of a time-of flight of an IR light pulse.

11. An imaging system (10) for generating a scaled 3D model of an object located within a field of view of the imaging system (10), comprising:
a light source (15) for illuminating the field of view with an infrared light signal configured to enable distance detection;
a pixelated image sensor (11) for detecting reflections of said infrared light signal;
processing circuitry (17) configured to:
acquire a feed of image frames from the pixelated image sensor;
identify a set of 2D anatomical feature points in the image frames;
generate a 3D model of the object based on the feed of image frames and the set of 2D anatomical features in each image frame;
determine a set of precise distance measures to a set of selected points in each image frame based on a subset of pixels in a surrounding of each point; and
scale the 3D model based on said precise distance measures.

12. A computer program product comprising computer program code portions configured to execute the method according to any one of claims 1 - 10 when executed on a computer processor connected to an IR light source and a pixelated image sensor.
